Europäisches Patentamt

(19) European Patent Office

Office européen des brevets

(11) Numéro de publication: **0 325 523**
**A1**

## DEMANDE DE BREVET EUROPEEN

(21) Numéro de dépôt: **89400128.8**

(22) Date de dépôt: **17.01.89**

(51) Int. Cl.⁴: **A 01 J 9/04**
**F 25 D 31/00**

(30) Priorité: **18.01.88 FR 8800484**

(43) Date de publication de la demande:
**26.07.89  Bulletin  89/30**

(84) Etats contractants désignés:
**BE DE ES IT NL SE**

(71) Demandeur: **PROMINOX S.A.**
**5, rue Albert 1er**
**F-58003 Nevers Cédèx  (FR)**

(72) Inventeur: **Meillan, Jean-Pierre**
**Meulot Montigny aux Amognès**
**F-58130 Guérigny  (FR)**

(74) Mandataire: **Doireau, Marc et al**
**OFFICE BLETRY 2, Boulevard de Strasbourg**
**F-75010 Paris  (FR)**

(54) **Système de refroidissement à détente directe et à cycle à compression de vapeur pour le stockage et la conservation du lait.**

(57) Le système de refroidissement comprend une cuve (1) dans laquelle est logé un évaporateur (2) relié à un groupe frigorifique (3) dans lequel circule un fluide régrigérant. Un dispositif pressostatique (15) limite la rotation d'un dispositif d'agitation (10), branché sur le circuit basse pression (8) entre l'organe de détente (6) et le compresseur (4) du groupe frigorifique (3), lorsque la valeur de la basse pression est supérieure à une valeur prédéterminée correspondant à une température moyenne du lait supérieure à 20°C.

FIG_1

## Description

## Système de refroidissement à détente directe et à cycle à compression de vapeur pour le stockage et la conservation du lait.

La présente invention concerne un système de refroidissement à détente directe et à cycle à compression de vapeur pour le stockage et la conservation du lait, du type comprenant une cuve dans laquelle est logé un évaporateur relié à un groupe frigorifique à compresseur, condenseur et organe de détente dans lequel circule un fluide réfrigérant, et un dispositif d'agitation comprenant au moins une pale.

Dans l'industrie laitière, il est courant de recourir à des systèmes de refroidissement directement implantés dans les exploitations laitières pour stocker et conserver le lait après chaque traite et entre deux collectes effectuées par un organisme centralisateur tel une coopérative laitière.

Un système de refroidissement classique, par exemple à détente directe et à cycle à compression de vapeur comprend une cuve de stockage dans laquelle est logé un évaporateur relié à un groupe frigorifique à compresseur, condenseur et organe de détente dans lequel circule un fluide réfrigérant qui, à chaque cycle, prélève une quantité de chaleur au lait stockée dans la cuve pour en abaisser la température et le maintenir à une température de l'ordre de 4°C imposée par les normes en vigueur. Le système de refroidissement est complété par un dispositif d'agitation qui assure périodiquement le brassage du lait pour :
- favoriser l'échange thermique par convection forcée entre l'évaporateur et le lait à refroidir, et
- éviter les remontées de matières grasses afin de conserver un lait homogène.

Cependant, il est reconnu que la matière grasse du lait est plus sensible aux traitements physiques et physico-chimiques à haute température qu'à basse température. Ces traitements provoquent un phénomène de lipolyse qui entraîne la dégradation de la matière grasse provoquée par le choc du lait contre les pales du dispositif d'agitation et par l'aération du lait lorsque les pales ne sont pas recouvertes ou partiellement recouvertes par le lait.

Pour résoudre ce problème de conservation des propriétés du lait à haute température, notamment entre 35°C ou température du lait après la traite et 20°C au cours du processus d'abaissement de la température du lait par le système de refroidissement, certaines installations comportent un système de prérefroidissement placé en amont de la cuve afin de prérefroidir le lait en dessous de 20°C, par utilisation d'un échangeur thermique utilisant de l'eau froide telle que de l'eau de ville ou eau de puits à 14°C par exemple. D'autres installations utilisent un système de refroidissement instantané qui permet de refroidir directement le lait, comme cela est décrit dans le brevet FR-2 491 607. Cependant, on ne dispose pas toujours d'eau froide en quantité suffisante et ces installations à prérefroidissement ou refroidissement instantané présentent un surcoût non négligeable.

Aussi, il est préférable pour résoudre le problème précité de limiter la rotation des pales du dispositif d'agitation lorsque la température du lait est supérieure à 20°C.

Il existe des installations équipées d'un dispositif purement thermostatique limitant la rotation des pales du dispositif d'agitation et comprenant une sonde thermostatique placée sur une paroi de la cuve ou dans un tube en contact avec le lait, à proximité du fond de la cuve où se trouve l'évaporateur, afin d'inhiber le dispositif d'agitation lorsque la température détectée est supérieure à 20°C. Cependant, un tel dispositif n'est pas fiable totalement, car lorsque l'évaporateur n'est que partiellement recouvert et que le dispositif d'agitation n'est pas en fonctionnement, il y a risque de gel du lait ou, au minimum, une nette diminution des performances frigorifiques du système de refroidissement.

Le but de l'invention est de proposer une nouvelle solution pour éviter le phénomène de lipolyse du lait entre les températures de 35°C et 20°C environ en palliant les inconvénients des systèmes antérieurs connus à ce jour.

A cet effet, l'invention propose un système de refroidissement à détente directe et à cycle à compression de vapeur pour le stockage et la conservation du lait qui se caractérise par la présence d'un dispositif pressostatique sensible à la basse pression entre l'organe de détente et le compresseur, et relié au circuit de commande du dispositif d'agitation pour limiter la rotation de la pale tant que ladite basse pression est supérieure à une valeur prédéterminée et pour provoquer la rotation de la pale lorsque ladite pression est inférieure à une valeur prédéterminée.

Selon une autre disposition du système conforme à l'invention, le dispositif pressostatique n'est actif que lorsque le compresseur est en fonctionnement.

Selon un mode préférentiel de réalisation du système de refroidissement conforme à l'invention, le dispositif pressostatique commande l'ouverture et la fermeture d'un contact monté dans le circuit de commande du dispositif d'agitation, ce contact étant en position fermée au début du processus de refroidissement du lait lorsque sa température est sensiblement comprise entre 35°C et 20°C, c'est-à-dire lorsque la basse pression d'évaporation en sortie de l'évaporateur est supérieure à une valeur prédéterminée, de l'ordre de 5,7 bars lorsque le liquide réfrigérant utilisé est du type $R_{22}$.

Selon un avantage de l'invention, le système est simple et peu coûteux, est fiable quelle que soit la quantité de lait stocké, et peut être facilement monté sur des installations existantes.

D'autres caractéristiques, avantages et détails ressortiront de la description explicative qui va suivre faite en référence aux dessins annexés donnés uniquement à titre d'exemple et dans lesquels :
- la figure 1 est une vue schématique d'un système de refroidissement conforme à l'invention, et

- la figure 2 est une vue simplifiée du circuit électrique de commande du dispositif d'agitation.

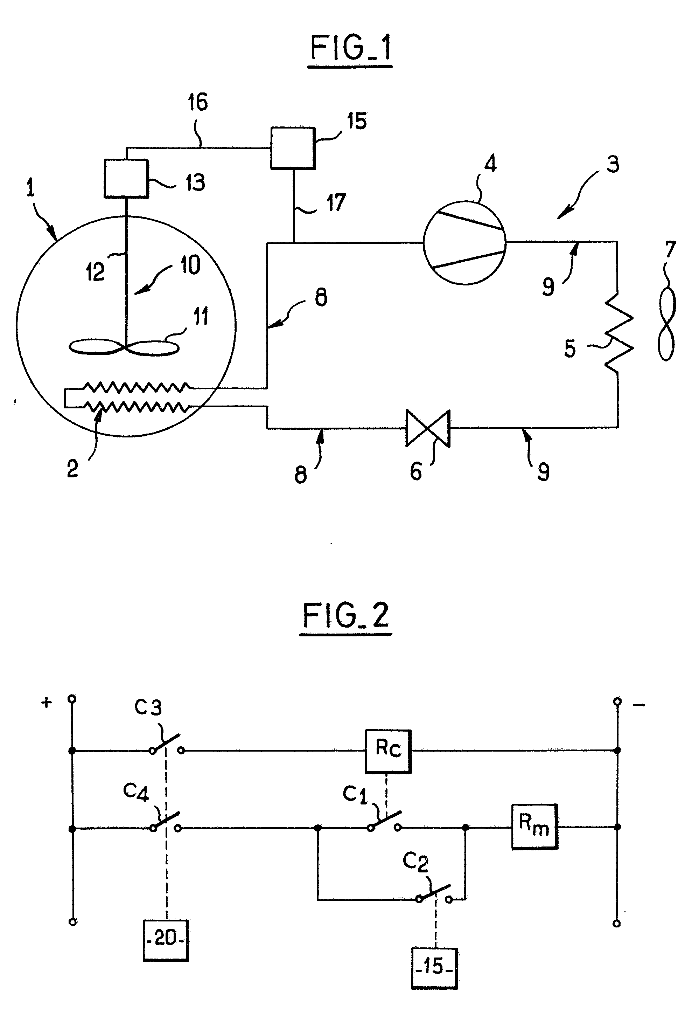

En référence à la figure 1, le système de refroidissement tel que schématiquement représenté est destiné à stocker et à conserver du lait après chaque traite et entre deux collectes par un organisme centralisateur tel une coopérative laitière.

Dans l'exemple considéré ici, le système de refroidissement est à détente directe et à cycle à compression de vapeur. D'une façon connue en soi, le système comprend une cuve 1 dans laquelle est logé un évaporateur 2 relié à un groupe frigorifique 3 à compresseur 4, condenseur 5 et organe de détente 6. Plus précisément, la sortie du compresseur 4 est relié à l'entrée du condenseur 5 dont la sortie est reliée à l'entrée de l'évaporateur 2 au travers de l'organe de détente 6, la sortie de l'évaporateur 2 étant reliée à l'entrée du compresseur 4. Le condenseur 5 est par exemple refroidi par un ventilateur 7. Un fluide réfrigérant de type $R_{22}$ circule dans l'évaporateur 2 et dans le groupe frigorifique 3 dans un sens déterminé : compresseur 4, condenseur 5, organe de détente 6, évaporateur 2 et compresseur 4. Il est ainsi défini un circuit fermé constitué par une tuyauterie 8 (circuit basse pression comprenant l'évaporateur 2) entre l'organe de détente 6 et le compresseur 4, et par une tuyauterie 9 (circuit haute pression comprenant le condenseur 5) entre le compresseur 4 et l'organe de détente 6. L'évaporateur 2 est par exemple du type "dimple plate ou à double fond imprimé" formé de deux plaques de tôle délimitant une enceinte en communication avec la tuyauterie 8 et dans laquelle circule le fluide réfrigérant.

Le système de refroidissement est complété par au moins un dispositif d'agitation 10 comprenant au moins une pale 11 à l'intérieur de la cuve 1 et monté à rotation à l'extrémité d'un axe 12 relié à un organe moteur 13, tel un motoréducteur situé à l'extérieur de la cuve 1, commandé par un dispositif pressostatique 15 relié au motoréducteur 13 par une liaison électrique 16. Le dispositif pressostatique 15 est lui-même commandé par la pression régnant dans le circuit basse pression de la tuyauterie 8, et est relié à celle-ci par une liaison 17 dont la nature est fonction du type de dispositif pressostatique utilisé. Dans l'exemple considéré ici, la liaison 17 est branchée sur la tuyauterie 8 après l'évaporateur 2, en amont du compresseur 4.

Le circuit électrique de commande du dispositif d'agitation 10 va être décrit ci-après en référence au schéma électrique simplifié illustré à la figure 2.

Entre les bornes ( +,-) d'une source d'alimentation (non représentée) sont au moins montés :
- un relais $R_c$ dont le contact $C_1$ est ouvert ou fermé souvant l'état marche ou arrêt du compresseur 4,
- un relais $R_m$ en série avec le contact $C_1$ et qui commande le motoréducteur 13, et
- un contact $C_2$ monté en parallèle sur le contact $C_1$ et commandé par le dispositif pressostatique 15.

Un circuit central de régulation 20 qui commande l'ensemble du système de refroidissement, agit notamment sur un premier contact $C_3$ monté en série avec le relais $R_c$ et sur second $C_4$ monté en série avec le relais $R_m$.

Le lait introduit dans la cuve 1 après chaque traite est à une température voisine de 35°C. Bien entendu, cette température tombe rapidement à une température inférieure dans le cas où la cuve 1 contient déjà une quantité de lait refroidi à une température voisine de 4°C ou en cours de refroidissement.

Supposons, après introduction d'une quantité de lait à l'intérieur de la cuve 1, que la température moyenne du lait stocké soit supérieure à 20°C, c'est-à-dire comprise entre 35°C et 20°C. Dans ces conditions, le circuit central de régulation 20, sensible à la température du lait stocké dans la cuve 1, provoque la fermeture du contact $C_3$ et, par suite, la fermeture du contact $C_4$. La fermeture du contact $C_3$ excite le relais $R_c$ qui ouvre son contact $C_1$. Le compresseur 4 est ainsi mis en fonctionnement, et le processus de refroidissement du lait est initialisé. A chaque cycle, le fluide réfrigérant se vaporise dans l'évaporateur 2 en prélevant une quantité de chaleur au mlilieu environnant, en l'occurrence le lait. Le dispositif pressostatique 15 branché sur la tuyauterie 8 du circuit basse pression maintient le contact $C_2$ ouvert tant que la basse pression $P_1$ est supérieure à 5,7 bars environ, ce qui correspond à une température $T_1$ supérieure à 9,5°C pour le fluide réfrigérant. Dans ces conditions, le dispositif d'agitation 10 est au repos. Ces valeurs pour $P_1$ et $T_1$ correspondent à un fluide réfrigérant tel que $R_{22}$.

Cependant, lorsque le dispositif d'agitation 10 ne fonctionne pas et bien que la température du lait soit supérieure à 20°C, la pression $P_1$ tend à diminuer du fait de mauvaises convections thermiques inhérentes à l'évaporateur 2 et peut atteindre une pression $P_2$ de l'ordre de 5 bars environ. Le dispositif pressostatique 15 se déclenche alors en entraînant la fermeture du contact $C_2$. Dans ces conditions le contact $C_4$ étant fermé et le relais $R_m$ excité, l'organe moteur 13 est alimenté et provoque la rotation de la pale 11. La basse pression remonte rapidement au dessus de la valeur $P_1$ le dispositif pressostatique ouvre le contact $C_2$, le relais $R_m$ n'est plus excité et le dispositif d'agitation 10 est arrêté. Ainsi, tant que la température moyenne du lait est supérieure à 20°C, les périodes d'agitation du lait sont limitées au minimum nécessaire pour empêcher tout phénomène de lipolyse.

Progressivement, au fur et à mesure du refroidissement du lait, les périodes d'agitation sont de plus en plus longues, jusqu'à ce que la basse pression reste en dessous de la valeur $P_2$ de 5 bars environ. Il y a alors une agitation continue pendant la fin du processus de refroidissement.

Il est à noter que le dispositif pressostatique 15 ne peut agir sur l'organe moteur 13 que si le compresseur 4 est en fonctionnement, car le circuit central de commande 20 ferme le contact $C_4$ que si le contact $C_3$ est préalablement fermé. En effet, il faut permettre la rotation de la pale 11, indépendamment du dispositif pressostatique 15, dans d'autres circonstances lorsque le compresseur 4 ne fonctionne pas. C'est le cas notamment au cours d'agitations cycliques du lait après refroidissement,

EP 0 325 523 A1

lors du prélèvement d'un échantillon pour contrôler le taux de matières grasses ou lors du lavage de la cuve 1 où l'on peut utiliser l'arbre creux 12 de commande en rotation de la pale 11 pour injecter de l'eau dans la cuve. Ces agitations cycliques sont commandées par le circuit central de régulation 20, et c'est la raison pour laquelle le contact $C_1$ du relais $R_c$ associé à la marche du compresseur 4 est fermé lorsque ce dernier ne fonctionne pas.

Bien entendu, l'invention décrite n'est pas limitée au mode de réalisation décrit et comprend tous les moyens équivalents qui assurent une limitation de l'agitation du lait à partir d'une commande en pression assurée à partir du circuit basse pression. En particulier le dispositif pressostatique 15 peut être branché à la sortie de l'organe de détente 6. Enfin, le fluide réfrigérant peut être quelconque, les valeurs des pressions $P_1$, $P_2$ et des températures $T_1$, $T_2$ étant adaptées au type de fluide utilisé.

## Revendications

1.- Système de refroidissement à détente directe et à cycle à compression de vapeur pour le stockage et la conservation du lait, du type comprenant une cuve dans laquelle est logé un évaporateur relié à un groupe frigorifique à compresseur, condenseur et un organe de détente dans lequel circule un fluide réfrigérant, et un dispositif d'agitation comprenant au moins une pale, caractérisé en ce qu'il comprend également un dispositif pressostatique (15) sensible à la basse pression régnant entre l'organe de détente (6) et le compresseur (4), relié au circuit de commande du dispositif d'agitation (10) pour limiter la rotation de ladite pale (11) tant que ladite basse pression est supérieure à une valeur prédéterminée ($P_1$) et pour provoquer la rotation de ladite pale lorsque ladite pression est inférieure à une valeur prédéterminée ($P_2$).

2.- Système selon la revendication 1, caractérisé en ce que le dispositif pressostatique (15) inhibe la rotation de la pale (11) lorsque la température du lait stocké est comprise entre 35 et 20°C, correspondant à une basse pression ayant une valeur supérieure à 5,7 bars environ pour un fluide réfrigérant de type 22

3.- Système selon la revendication 1 ou 2, caractérisé en ce que le dispositif pressostatique (15) ne peut commander la rotation de la pale (11) que si le compresseur 4 est en marche.

4.- Système selon l'une quelconque des revendications 1 à 3, caractérisé en ce que le dispositif pressostatique (15) commande la rotation de la pale (11) lorsque la température du lait stocké est inférieure à 20°C, correspondant à une basse pression ayant une valeur inférieure à 5 bars environ pour un fluide réfrigérant de type 22.

5.- Système selon l'une quelconque des revendications 1 à 4, caractérisé en ce que le dispositif pressostatique (15) est branché sur la portion de tuyauterie basse pression (8).

4

EP 0 325 523 A1

## FIG_1

## FIG_2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 731 494 (FLECK) <br> * Colonne 2, ligne 25 - colonne 5, ligne 51; figures 1-3 * <br> --- | 1,5 | A 01 J 9/04 <br> F 25 D 31/00 |
| A | US-A-2 916 891 (SWANSON) <br> * Colonne 2, ligne 1 - colonne 5, ligne 12; figures 1-3 * <br> --- | 1,5 | |
| A | US-A-2 875 590 (GIRTON) <br> * Colonne 3, ligne 21 - colonne 9, ligne 45; figures 1-5 * <br> --- | 1,5 | |
| A | CH-A- 455 850 (ETSCHEID) <br> * Colonne 5, ligne 16 - colonne 6, ligne 34; figures 1-4 * <br> --- | 1,5 | |
| A | DE-A-2 200 399 (ETSCHEID) <br> --- | | |
| A | US-A-2 986 895 (MOLINE) <br> --- | | |
| A | US-A-2 945 356 (SCHULTZ) <br> --- | | DOMAINES TECHNIQUES RECHERCHES (Int. Cl.4) |
| A | US-A-2 937 509 (RUSSELL) <br> --- | | F 25 D <br> A 01 J <br> A 23 C |
| A | GB-A- 965 184 (LANGLET) <br> ----- | | |

Le présent rapport a été établi pour toutes les revendications

| Lieu de la recherche | Date d'achèvement de la recherche | Examinateur |
|---|---|---|
| LA HAYE | 25-04-1989 | BOETS A.F.J. |